# EUROPEAN PATENT SPECIFICATION

(11) **EP 1 590 261 B1**
(45) Date of publication and mention of the grant of the patent: **24.03.2010**
(21) Application number: 03776672.2
(22) Date of filing: 11.12.2003
(51) Int. Cl.: B65D 81/02, B65D 85/82, B65D 25/54, B25J 21/02, A62B 29/00

(54) **APPARATUS FOR CONTAINED INSPECTION AND TRANSPORTATION OF SUSPECT OBJECTS**
VORRICHTUNG ZUR GESCHLOSSENEN ÜBERPRÜFUNG UND TRANSPORTIERUNG VERDÄCHTIGER OBJEKTE
APPAREIL D'INSPECTION EN MILIEU FERME ET DE TRANSPORT D'OBJETS SUSPECTS

(30) Priority: 12.12.2002 AU 2002953296
(43) Date of publication of application: 02.11.2005
(73) Proprietor: Roberts, Timothy, Phillip, Australian Capital Territory 2606 (AU); Head, Margaret, Isaacs, Australian Capital Territory 2607 (AU)
(72) Inventor: ROBERTS, Timothy, Phillip, Australian Capital Territory 26 (AU)
(74) Representative: Reeve, Nicholas Edward
(86) International application number: PCT/AU2003/001653
(87) International publication number: WO 2004/052748

(56) References cited:
- BE-A- 869 738
- CA-A1- 2 360 910
- DE-A1- 2 922 321
- DE-U1- 20 117 239
- FR-A- 2 254 409
- FR-A- 2 823 731
- FR-A1- 2 831 062
- GB-A- 2 306 376
- JP-A- 63 138 991
- JP-A- 2003 200 148
- US-A- 4 460 102
- US-A- 4 972 087
- US-A1- 2002 105 251

## Description

### Technical Field

The present invention relates to an apparatus or device for the contained inspection and transportation of objects suspected of being potentially dangerous, and in particular, to an apparatus for the contained inspection and possible subsequent transportation of envelopes, mail, packages, parcels, letters and the like, suspected of containing potentially dangerous substances.

### Background Art

Subsequent to the terrorist activity of 11 September 2001 in the United States and the subsequent anthrax contaminated envelopes entering the mail system in the United States, many other countries have also experienced a spate of envelopes being received via the mail system which contain suspicious white powder.

Prior to being able to determine whether or not the white powder is a dangerous substance a response procedure is required to be initiated for safety reasons. The response procedure requires a full hazardous material handling procedure to be initiated by relevant emergency response authorities. The affected area, including all affected persons, are generally required to be contained until such time as the results of the analysis of the unknown substance becomes available. Such incidents result in stress and trauma to the affected persons, considerable loss of productivity and ties up emergency service resources.

Given that it is relatively simple for an antagonist to insert a substance into an envelope, or any other similar package, which is often a harmless white powder, there is a need to provide a response procedure utilising apparatus that lessens the impact on affected persons, productivity and emergency services.

Laboratory "glove-box" type products are known that allow a user to insert his or her forearms and hands into gloves, allowing the user to safely handle objects within the glove-box. Such laboratory glove-boxes are bulky and are not designed to be transportable. Furthermore, they are typically also relatively expensive. Other styles of glove-boxes are constructed of plastic sheeting and require frames and inert gases to inflate them, which further complicates the procedure for safe handling of potentially dangerous objects. In addition, many known glove-boxes are not robust and portable which is a significant disadvantage.

DE-U-201 17 239 discloses a rigid, airtight glove-box for the contained inspection of a potentially dangerous object, the glove-box being provided with a handle for possible transportation.

This identifies a need for apparatus for the contained inspection and possible transportation of potentially dangerous objects which improves safety during transportation.

### Disclosure Of Invention

The present invention provides an examination, isolation and transportation apparatus/device for suspicious objects, for example, suspicious mail that may potentially contain or be contaminated by dangerous biological or chemical agents. The apparatus/device is preferably relatively lightweight, robust, easy to use and readily transportable. The apparatus/device can find application in, for example but not limited to, a mail room environment, home, office, law enforcement agency, government department, military, vessel at sea, etcetera.

In a broad form, the present invention provides an apparatus for the contained inspection and possible transportation of a potentially dangerous object according to claim 1.

Preferably, at least a portion of the inspection unit is substantially transparent. Also preferably, at least a portion of a body section or a base section of the inspection unit is opaque, preferably of a dark colour. In a particular use, the object is an envelope, mail, package, parcel, letter or the like.

According to one aspect of an embodiment of the invention, the inspection unit includes a first section and a second section adapted to be clamped or latched together. According to another aspect of an embodiment of the invention, the first section and the second section are hinged together. According to still another aspect of an embodiment of the invention, the first section is a lid section and the second section is a body section or a base section.

Preferably, the sealed environments of the inspection unit and the transportation unit are substantially airtight. Also preferably, the user can visually inspect the object in the inspection unit.

In a specific embodiment of the present invention, two glove members are provided. In a further specific embodiment of the present invention, the transportation unit includes a first section and a second section adapted to be clamped together. In still a further specific embodiment of the present invention, the first section and the second section of the transportation unit are hinged together. In still a further specific embodiment of the present invention, the first section is a lid section and the second section is a body section or a base section. In an alternate embodiment, the transportation unit includes a lid section and a body section or base section adapted to be press-sealed together.

Preferably, the transportation unit is resilient against external forces and shocks. In still a further specific embodiment of the present invention, the inspection unit also includes integrated magnifying means. In still a further specific embodiment of the present invention, the transportation unit includes padding or shock absorbing material. In still a further specific embodiment of the present invention, closure of the transportation unit securely holds the inspection unit placed therein.

### Brief description Of Figures

The present invention should become apparent from the following description, which is given by way of example only, of a preferred but non-limiting embodiment thereof, described in connection with the accompanying figures.
Figure 1 illustrates an embodiment of the present invention, wherein the figure shows a front perspective view of the inspection unit.
Figure 2 illustrates an embodiment of the present invention, wherein the figure shows a rear perspective view of the inspection unit.
Figure 3 illustrates a top view of the inspection unit illustrated in Figure 1 when closed.
Figure 4 illustrates a side view of the inspection unit illustrated in Figure 1 when closed.
Figure 5 illustrates a front perspective view of the inspection unit illustrated in Figure 1 when closed.
Figure 6 illustrates a rear perspective view of the inspection unit illustrated in Figure 1 when closed.
Figure 7 illustrates a front view of the inspection unit illustrated in Figure 1 when closed.
Figure 8 illustrates an embodiment of the present invention, wherein the figure shows an exploded perspective view of the transportation unit.

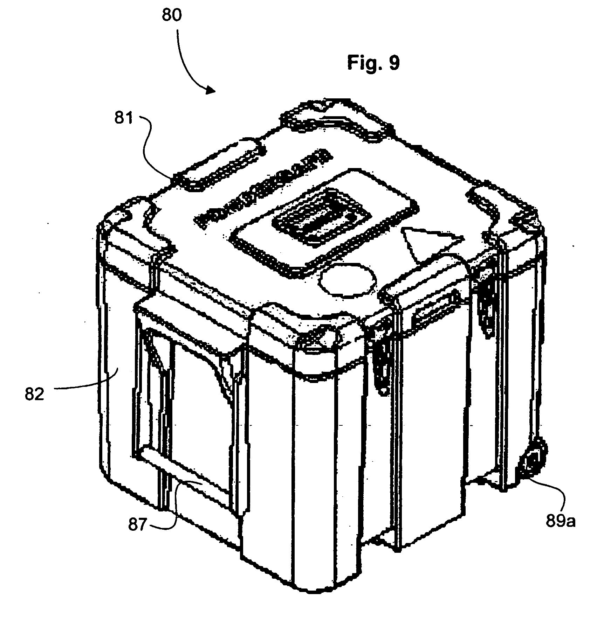

Figure 9 illustrates an embodiment of the present invention, wherein the figure shows a perspective view of the transportation unit when closed.

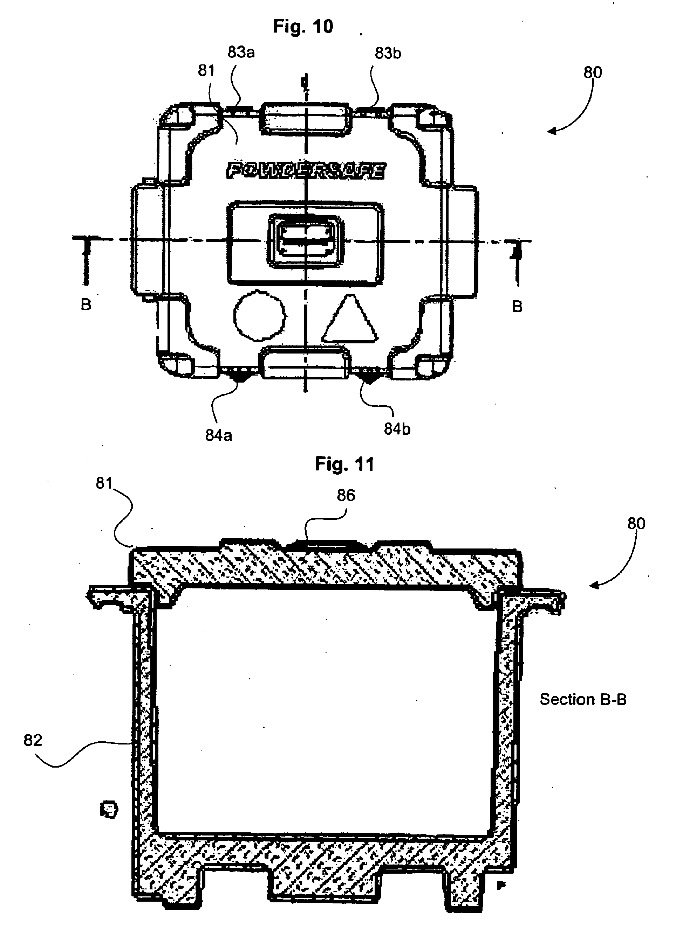

Figure 10 illustrates a top view of the transportation unit illustrated in Figure 9.
Figure 11 illustrates a cross-sectional view along line B-B of the transportation unit illustrated in Figures 9 and 10.
Figure 12 illustrates a side view of the transportation unit illustrated in Figure 9.
Figure 13 illustrates a cross-sectional view along line A-A of the transportation unit illustrated in Figures 9 and 12.

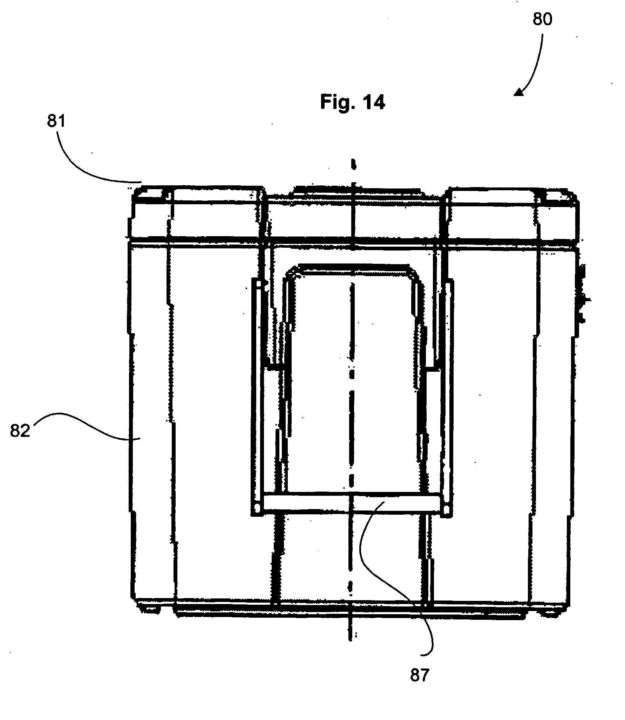

Figure 14 illustrates an alternate further side view of the transportation unit illustrated in Figure 9.

### Modes For Carrying Out The Invention

The following modes are described in order to provide a more precise understanding of the subject matter of the present invention and should not be considered as limiting the scope of the present invention. In the figures, incorporated to illustrate the features of the present invention, like reference numerals are used to identify like parts throughout the figures.

In a preferred embodiment apparatus is provided which allows a user to examine suspicious mail or the like in an airtight or sealed environment, whereby the mail and its contents can be visually examined within the airtight environment. If further analysis of the mail and/or its contents is required the mail can be maintained in the airtight environment and transferred to a second airtight or sealed environment which provides important additional protection during transportation to a specialist analysis site, for example a biochemical or forensic laboratory.

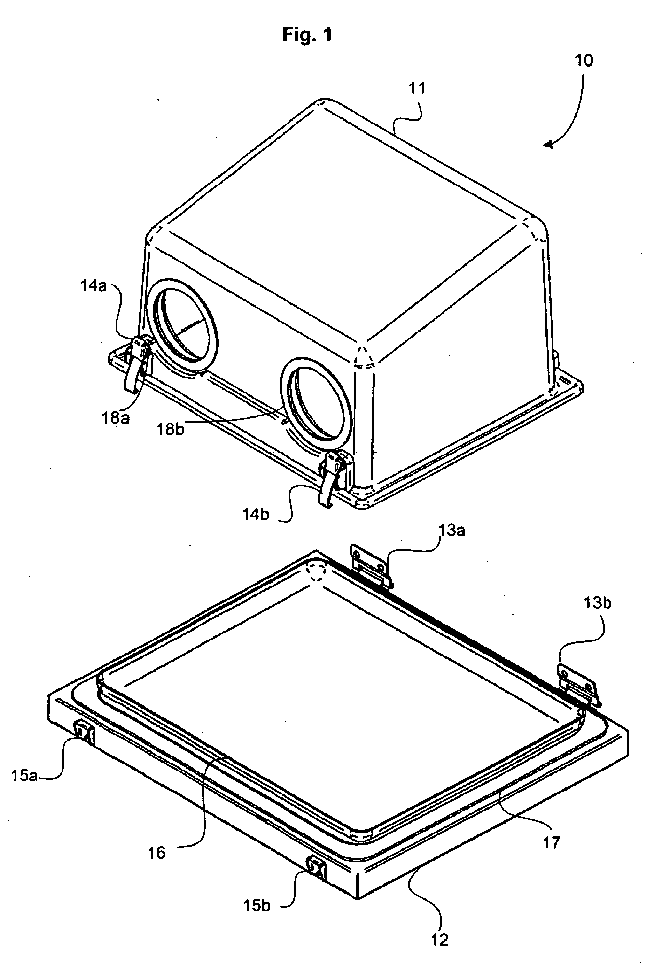

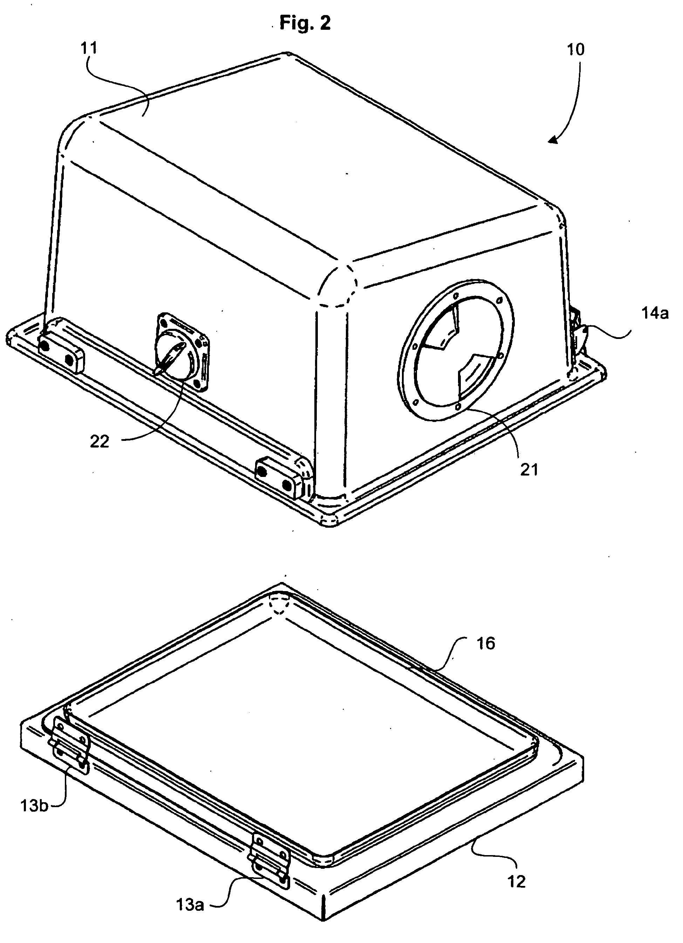

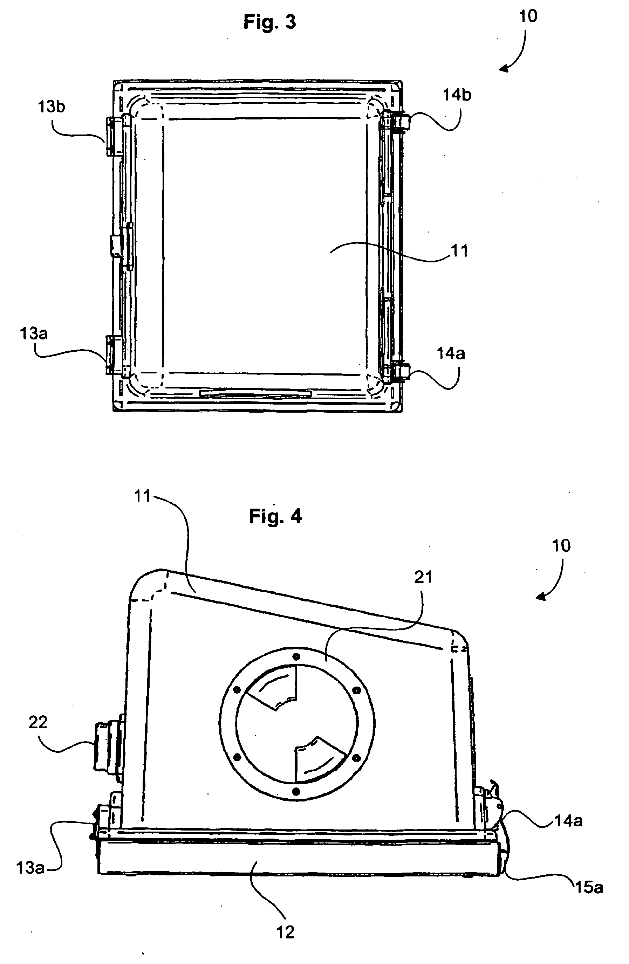

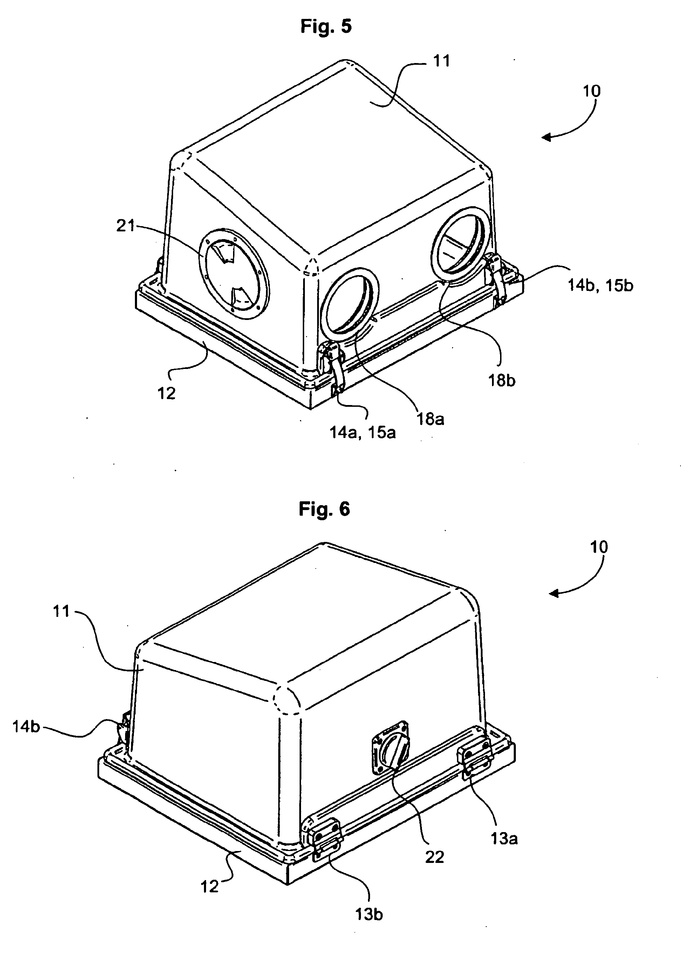

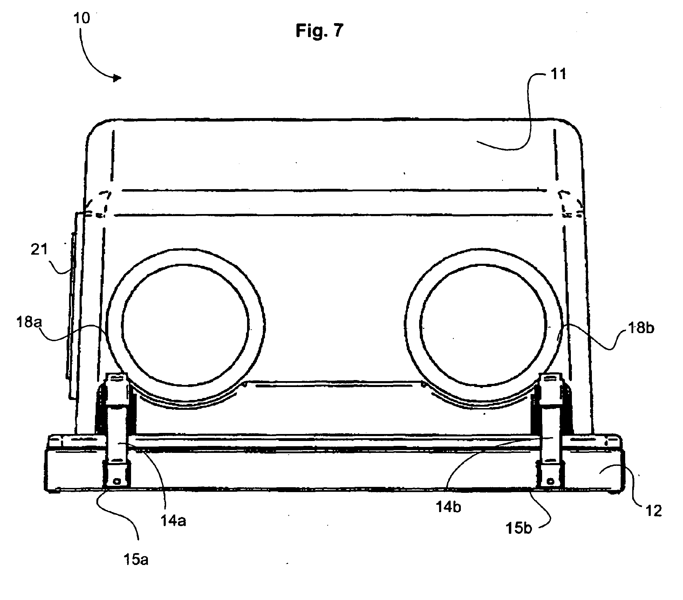

Referring to figures 1 to 7, when a potentially dangerous object (not illustrated) is received and identified as being potentially dangerous, the object is placed in the inspection unit 10. To place the object in the inspection unit 10 the lid section 11 is removed or opened and the object placed in or on the base section (or alternatively body section) 12 of the inspection unit 10. The lid section 11 is then sealed against the base section 12 to provide a sealed environment containing the object. The extent of the height of the lid section 11 or the base section 12 can be varied. For example, the shapes of the lid section 11 and the base section 12 may be substantially interchanged so that the base section 12 can be considered as a body section having a substantial height. Alternatively, the lid section 11 and the body or base section 12 could be provided to be similar depths.

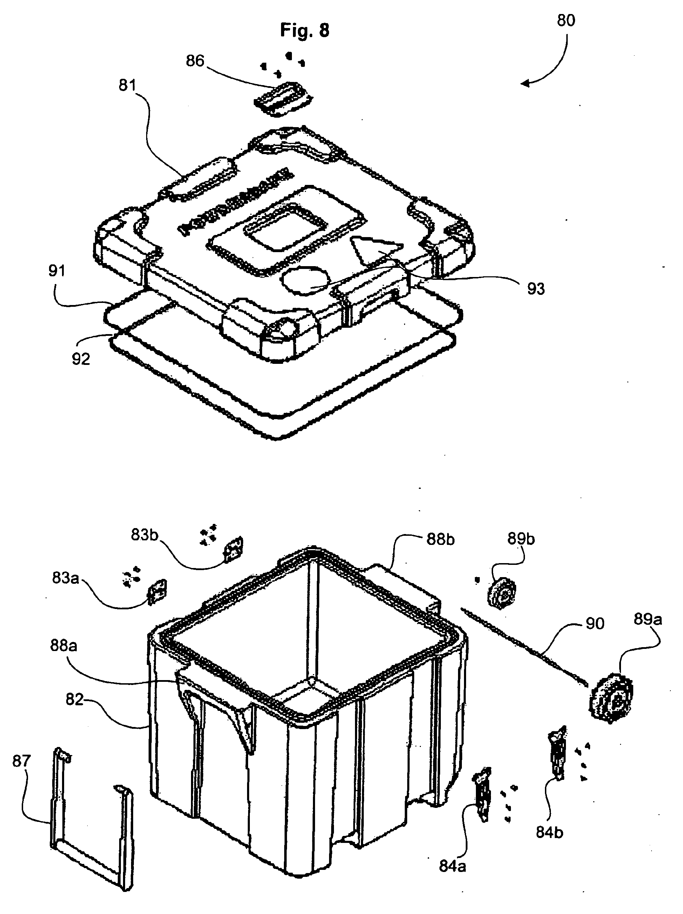

After examination of the object within the inspection unit 10, should the user believe that further analysis of the object or its contents is required, the inspection unit 10 is then wholly placed within a transportation unit (illustrated in figure 8). The inspection unit 10 is placed into a body section of the transportation unit after which a lid section of the transportation unit is sealed to the body section, thereby providing a further sealed environment that completely contains the inspection unit 10.

The potentially dangerous object is hence contained within two separate sealed environments and can then be relatively safely transported to an analysis site. Both the inspection unit and the transportation unit are preferably of a suitable size and material so that they are portable allowing ease of transportation of the potentially dangerous object to the analysis site.

Referring further to figures 1 to 7 wherein various views and features of the inspection unit 10 are illustrated, the lid section 11 is preferably provided as an enclosure assembly that is substantially transparent allowing the user to visually inspect the potentially dangerous object. Parts of the lid section 11 may be opaque or the lid section 11 may be substantially totally manufactured from a transparent material, for example a transparent plastic. Regions of the base section 12 may also be transparent, but preferably, the base section 12 is substantially opaque, preferably of a dark colour such as black or dark blue. This assists the user in visually identifying a white powder against a dark background. Regions of the lid section 11 may similarly be a dark colour if desired. Preferably, the inspection unit 10 is substantially made of a moulded plastic(s).

The lid section 11 and the base section 12 are adapted to be clamped or closed together using clamp or latch means. In the preferred embodiment, two cranked hinges 13a and 13b are attached to the base section 12 and the lid section 11 to allow these sections to be joined together but rotatable with respect to each other. Draw latches 14a and 14b are also provided on the lid section 11 and associate with keepers or protrusions 15a and 15b, respectively, that are provided as part of, or attached to, the base section 12. When the lid section 11 is rotated to close against the base section 12 the latches 14a and 14b can be closed against the keepers 15a and 15b to seal the inspection unit 10. It should be noted that a varying number or variety of latch or clamp means can be utilised as required. For example, latches or clamps can be provided at different locations on the inspection unit and hinges 13a and 13b could be replaced with further clamps or latches. The clamp or latch means may be any type of device, or mixture of devices, which assist to secure or attach the lid section 11 to the base section 12 to provide a sealed environment internal to the inspection unit 10.

A tray 16 is also preferably provided on or integrated with the base section 12. The tray 16 may be fixed or removable. A seal or base gasket 17 is preferably provided associated with the base section 12, and a further seal or lid gasket (not illustrated) is preferably provided associated with the lid section 11. These seals or gaskets are provided at or near the interface between the lid section 11 and the base section 12 and abut each other when the inspection unit 10 is closed to assist in providing an air tight environment within the inspection unit 10. Alternatively, a single seal or gasket only might be provided associated with either the lid section 11 or the base section 12.

When the inspection unit 10 is closed the user then inserts both forearms/hands through the hand access orifices 18a and 18b so that glove members (not illustrated) attached to the hand access orifices 18a and 18b and internal to the inspection unit 10 are fitted over the users hands. The user is then able to use his or her hands to manipulate the object within the sealed environment of the inspection unit 10 without breaching the sealed environment.

The lid section 11 can also be provided with a magnifying section on the top surface so that when the user visually inspects the object within the inspection unit 10 the contents of the inspection unit 10 are magnified to the eyes of the user.

The inspection unit 10 can also be provided with an inspection port assembly 21 which can be sealed but provides the possibility to be used as a further access point to manipulate an object within the inspection unit 10. Preferably, glove members (not illustrated) are attached to access regions 18a and 18b, and possibly 21, however, it should be noted that any other type of device which allows a user to inspect and/or manipulate the object within the inspection unit 10, without breaching the sealed environment, could be utilised. Furthermore, a plug assembly or port 22 can be provided as illustrated. The plug assembly 22 could be utilised for a variety of purposes. In a particular embodiment, the port 22. is approximately 40mm in diameter and allows fire and testing authorities a small port through which chemical or radiological probes can sample the contents of the unit 10, without having to open the main seal. The unit has been tested for compatibility with equipment such as the AP2C, PID (Photo Ionisation Detectors), the Bruker raid for chemicals, the Exploranium GR135 and Rotem R200 for radiological substances. The unit may be taken to a controlled area where the rear port can be opened and testing performed. The plug 22 is then replaced, and if required, the outside of the unit 10 flushed down to remove any possible escaped contaminant. Use of decontamination foam or solutions is also possible. The larger port 21 is preferably just over 100mm in diameter and is provided so that when the unit 10 is in a Biosafety cabinet access can be gained via port 21 instead of opening the main seal. Port 21 is large enough for a gloved hand or small equipment to be passed into the unit 10, again to reduce the exposure risk to the operator. Other uses of port 22 are also possible, for example, to equalise air pressure to facilitate opening of the inspection unit 10, to be attached to tubing or the like so that air may be removed from the inspection unit 10, for example to create a vacuum, to introduce a suitable gas into the inspection unit 10, or as a general purpose point of further access. It should be noted that both the inspection port assembly 21 and the plug or port assembly 22 need not necessarily be provided or can be provided in alternate locations or configurations. It should also be appreciated that if the lid section 11 is substantially planar and the base section 12 is provided with most of the height of the inspection unit 10, then the access orifices 18a and 18b would obviously be provided as part of the base section 12.

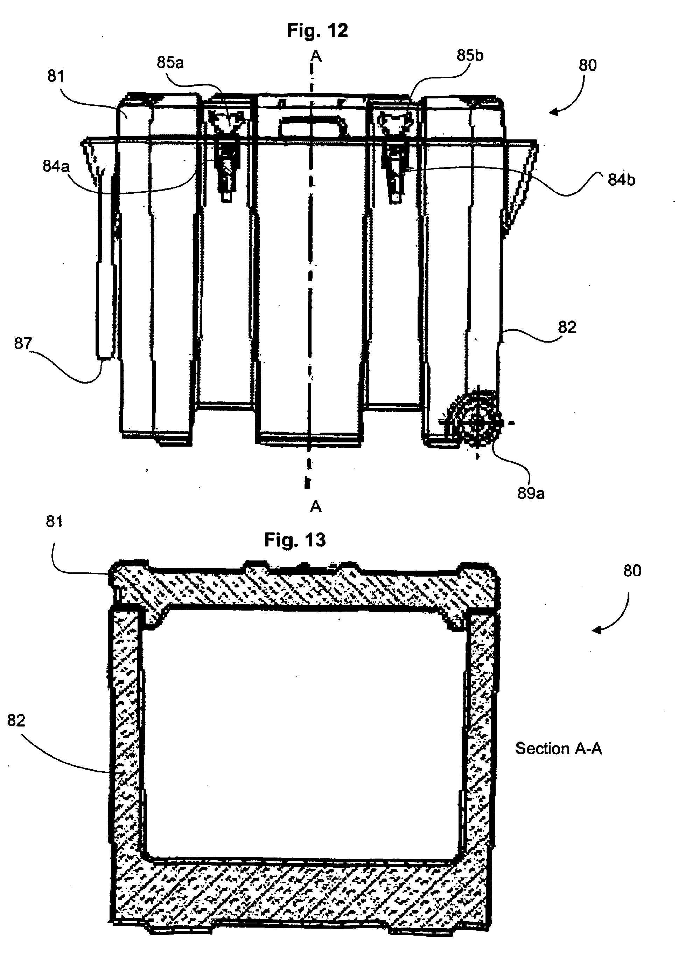

Referring to figure 8, this figure illustrates an exploded perspective view of a preferred embodiment of the transportation unit 80. The transportation unit 80 includes a lid section 81 and a base or body section 82 which join together to provide an air tight environment when the lid section 81 is engaged with the body section 82. As discussed for the inspection unit 10, the depth or height of the lid section 81 and the body or base section 82 can be varied, for example body section 82 could be substantially planar and lid section 81 could be provided with walls having substantial height. Also similarly as for the inspection unit 10, the transportation unit 80 is preferably provided with hinges 83a and 83b that fixedly attach to the lid section 81 and the body section 82 allowing the lid section 81 to rotate and close against the body section 82. Latches 84a. and 84b are provided attached to the body section 82 and fix against hooks or protrusions 85a and 85b (see figure 12) attached to or integrated with the lid section 81. Also as discussed previously, the type, configuration, or combination of clamps, latches, hinges, etc. can be altered or varied as desired.

Also illustrated in figure 8 is a handle 86 fixed to the lid section 81. A further handle 87 can be provided to attach to protrusions 88a and/or 88b which assist a user with lifting or carrying the transportation unit 80. Furthermore, the transportation unit 80 can be provided with wheels 89a and 89b, fixed by a rod or axel 90 to the body section 82, that may assist with transportation of the transportation unit 80. Seals or gaskets 91 and 92 can also be provided associated with the lid section 81 and the body section 82, respectively, to assist in providing an air tight environment when the lid section 81 is engaged with the body section 82. Various indicia 93 can be provided on the transportation unit 80 indicating its contents may present a chemical or biological hazard.

It should be appreciated that a variety of mechanisms to seal lid section 81 against body section 82 can be envisaged. For example, hinge and latch means may not be provided but the lid section 81 may be adapted to press-seal against the body section 82. Any mechanical structure that allows the lid section 81 to affix, engage, secure, lock or the like with the body section 82, and provide a sealed environment, can be utilised in the present invention.

The transportation unit 80 is preferably made of a resilient plastic so that it can withstand external forces and/or shocks. Furthermore, the transportation unit 80 may be provided with internal padding and/or shock absorbing material. This assists in insulating the inspection unit 10 from damage or breach during transportation of the potentially dangerous object to the analysis site. Furthermore, the transportation unit 80 could be provided with locking means to prevent unauthorised access to the potentially dangerous object. In a particular form, the transportation unit 80 is fitted with two independent airtight seals and is double walled and insulated. In combination with the inspection unit 10 the apparatus thus provides a triple walled containment system with three independent airtight seals.

The following further example provides a more detailed outline of an embodiment of the present invention. The example is intended to be merely illustrative and not limiting to the scope of the present invention.

The apparatus for the contained inspection and transportation of suspect objects provides a light-weight, airtight and durable unit for the examination and transportation of mail suspected to contain a hazardous substance, for example a powder substance. The apparatus is preferably made of moulded plastic consisting of a tub-like lid which is provided with side entry portals for a user's hands to slip into built-in gloves. The base of the apparatus is preferably dark (black or dark blue) to provide the best contrast against a light coloured powdered substance. A moulded base section is fitted with an airtight seal and is further secured to the lid by locking clamps which should be able to survive dropping or other impacts intact. The lid section is transparent and is optionally provided with an in-built magnifying section allowing magnified examination of suspect mail.

Implements can be left within the apparatus for use by the user when inspecting mail. For example, a round-end flat blade letter opener could be provided. The total weight of the apparatus is preferably able to be easily handled without risk of the integrity of the sealed environment being breeched. A transportation unit of the apparatus receives the inspection unit and thus provides double-wall security during transport in the event of dropping or an accident occurring. Safety instructions and a preferred procedure to follow in the event of the receipt of suspicious mail can be provided to complement the apparatus.

The inspection unit is designed to allow the safe examination of mail, including larger envelopes, for example A4 size and small parcels, in a wholly contained environment. Once mail is identified as being suspicious and is believed to contain a hazardous material, for example a powder substance, the mail is placed into the inspection unit and the lid section is closed and locked. The suspicious mail is then opened or further inspected in the inspection unit with the user provided with a clear view through the lid section. If the mail contains any contaminant the inspection unit is then wholly placed within the transportation unit and transported to a suitable examination laboratory or analysis site by the appropriate personnel. This process also reduces the number of persons handling the suspicious mail thereby allowing preservation of possible forensic evidence.

Components of the apparatus are preferably single pieces of moulded plastic, the glove members could be vinyl gloves or made from any other suitable material. The transportation unit would preferably be clearly marked as containing biohazardous material. Seals used in the apparatus could be soft rubber seals. Padding or restraining devices can be provided internally to the transportation unit to assist in providing physical protection and/or stability for the inspection unit.

The inner inspection/containment unit can be designed to handle various sizes of suspicious mail, for example A4 size envelopes. Units of other dimensions can also be provided. In a particular preferred form the gloves are nitrile gloves, which have high chemical and abrasive resistance and do not expose the user to the risk of a latex reaction. In the preferred embodiment, the inspection unit weighs approximately three kilograms and is generally robust.

The outer transportation unit is built to high standards and is designed to cradle the inner inspection unit during transportation and to provide maximum protection of the inner inspection unit and its contents. The transportation unit may be of high visibility yellow colour and clearly marked as containing a potentially biological or chemical hazard. In this embodiment, the transportation unit is designed to withstand falls from up to three metres without damage to the contents, and the combined weight of the two units is approximately thirteen kilograms.

Thus, there has been provided in accordance with the present invention, apparatus for the contained inspection and, if required, transportation of potentially dangerous objects.

Although the preferred embodiment has been described in detail, it should be understood that various changes, substitutions, and alterations can be made herein by one of ordinary skill in the art without departing from the scope of the present invention as set forth in the appended claims.

## Claims

1. Apparatus for the contained inspection and possible transportation of a potentially dangerous object, the apparatus comprising:
an inspection unit (10), the inspection unit (10) including at least a first section (11) and a second section (12) able to open to receive the object and then close to provide a scaled airtight environment for manual inspection of the object, the first section (11) and the second section (12) being substantially rigid, the inspection unit (10) also including at least one glove member allowing a user external to the sealed environment of the closed inspection unit (10) to manipulate the object within the closed inspection unit (10); and,
a transportation unit (80), the transportation unit (80) including at least a first section (81) and a second section (82) able to open to wholly receive the inspection unit (10) and then close to provide a further sealed airtight environment containing the inspection unit (10) the first section (81) and the second section (82) of the transportation unit (80) being substantially rigid.

2. The apparatus as claimed in claim 1, wherein at least a portion of the inspection unit (10) is substantially transparent.

3. The apparatus as claimed in either claim 1 or claim 2, wherein at least a portion of a body section (12) or a base section (12) of the inspection unit (10) is opaque, preferably of a dark colour.

4. The apparatus as claimed in any one of the claims 1 to 3, wherein the object is an envelope, mail, package, parcel, letter or the like.

5. The apparatus as claimed in any one of the claims 1 to 4, wherein the first section (11) and the second section (12) of the inspection unit (10) are adapted to be clamped or latched together.

6. The apparatus as claimed in claim 5, wherein the first section (11) and the second section (12) of the inspection unit (10) are hinged (13a, 13b) together.

7. The apparatus as claimed in either claim 5 or claim 6, wherein the first section (11) of the inspection unit (10) is a lid section and the second section (12) of the inspection unit (10) is a body section or a base section.

8. The apparatus as claimed in any one of the claims 1 to 7, wherein the transportation unit (80) can generally be lifted and moved by a single person.

9. The apparatus as claimed in any one of the claims 1 to 8, wherein the user can visually inspect the object in the inspection unit (10).

10. The apparatus as claimed in any one of the claims 1 to 9, wherein two glove members are provided.

11. The apparatus as claimed in any one of the claims 1 to 10, wherein the first section (81) and the second section (82) of the transportation unit (80) are adapted to be clamped together.

12. The apparatus as claimed in any one of the claims 1 to 11, wherein the transportation unit (80) is double walled with two independent airtight seals.

13. The apparatus as claimed in either claim 11 or claim 12, wherein the first section (81) of the transportation unit (80) is a lid section and the second section (82) of the transportation unit is a body section or a base section.

14. The apparatus as claimed in claim 13, wherein the lid section (81) and the body section or base section (82) of the transportation unit (80) are adapted to be press-sealed together.

15. The apparatus as claimed in any one of the claims 1 to 14, wherein the transportation unit (80) is provided with wheels (89a, 89b).

16. The apparatus as claimed in any one of the claims 1 to 15, wherein the inspection unit (10) also includes integrated magnifying means in the first section (11).

17. The apparatus as claimed in any one of the claims 1 to 16, wherein the transportation unit (80) includes internal padding or shock absorbing material.

18. The apparatus as claimed in any one of the claims 1 to 17, wherein closure of the transportation unit (80) securely holds the inspection unit (10) placed therein.

19. The apparatus as claimed in any one of the claims 1 to 18, wherein the inspection unit (10) is provided with a sealable port (22) to receive a probe.

20. The apparatus as claimed in claim 19, wherein the inspection unit (10) is provided with a further sealable inspection port (21) having a diameter substantially larger than the sealable port (22).

## Patentansprüche

1. Vorrichtung für die eingeschlossene Überprüfung und für den möglichen Transport eines potenziell gefährlichen Objekts, wobei die Vorrichtung umfasst:
eine Überprüfungseinheit (10), wobei die Überprüfungseinheit (10) mindestens einen ersten Abschnitt (11) und einen zweiten Abschnitt (12) enthält, die geöffnet werden können, um das Objekt aufzunehmen, und daraufhin geschlossen werden können, um eine abgedichtete, luftdichte Umgebung für die manuelle Überprüfung des Objekts bereitzustellen, wobei der erste Abschnitt (11) und der zweite Abschnitt (12) im Wesentlichen starr sind, wobei die Überprüfungseinheit (10) außerdem mindestens ein Handschuhelement enthält, das zulässt, dass ein Benutzer außerhalb der abgedichteten Umgebung der geschlossenen Überprüfungseinheit (10) das Objekt innerhalb der geschlossenen Überprüfungseinheit (10) manipuliert; und
eine Transporteinheit (80) wobei die Transporteinheit (80) mindestens einen ersten Abschnitt (81) und einen zweiten Abschnitt (82) enthält, die geöffnet werden können, um die Überprüfungseinheit (10) vollständig aufzunehmen, und die daraufhin geschlossen werden können, um eine weitere abgedichtete, luftdichte Umgebung bereitzustellen, die die Überprüfungseinheit (10), den ersten Abschnitt (81) und den zweiten Abschnitt (82) der Transporteinheit (80), die im Wesentlichen starr sind, enthält.

2. Vorrichtung nach Anspruch 1, bei der mindestens ein Teil der Überprüfungseinheit (10) im Wesentlichen durchsichtig ist.

3. Vorrichtung entweder nach Anspruch 1 oder nach Anspruch 2, bei der mindestens ein Teil eines Körperabschnitts (12) oder eines Basisabschnitts (12) der Überprüfungseinheit (10) undurchsichtig, vorzugsweise von einer dunklen Farbe, ist.

4. Vorrichtung nach einem der Ansprüche 1 bis 3, bei der das Objekt ein Briefumschlag, eine Postsendung, ein Paket, ein Päckchen, ein Brief oder dergleichen ist.

5. Vorrichtung nach einem der Ansprüche 1 bis 4, bei der der erste Abschnitt (11) und der zweite Abschnitt (12) der Überprüfungseinheit (10) zusammengeklemmt oder miteinander eingerastet werden können.

6. Vorrichtung nach Anspruch 5, bei der der erste Abschnitt (11) und der zweite Abschnitt (12) der Überprüfungseinheit (10) aneinander angelenkt (13a, 13b) sind.

7. Vorrichtung nach Anspruch 5 oder nach Anspruch 6, bei der der erste Abschnitt (11) der Überprüfungseinheit (10) ein Deckelabschnitt ist und der zweite Abschnitt (12) der Überprüfungseinheit (10) ein Körperabschnitt oder ein Basisabschnitt ist.

8. Vorrichtung nach einem der Ansprüche 1 bis 7, bei der die Transporteinheit (80) allgemein durch eine einzelne Person angehoben und bewegt werden kann.

9. Vorrichtung nach einem der Ansprüche 1 bis 8, bei der der Benutzer das Objekt in der Überprüfungseinheit (10) visuell überprüfen kann.

10. Vorrichtung nach einem der Ansprüche 1 bis 9, bei der zwei Handschuhelemente vorgesehen sind.

11. Vorrichtung nach einem der Ansprüche 1 bis 10, bei der der erste Abschnitt (81) und der zweite Abschnitt (82) der Transporteinheit (80) zusammengeklemmt werden können.

12. Vorrichtung nach einem der Ansprüche 1 bis 11, bei der die Transporteinheit (80) doppelwandig mit zwei unabhängigen luftdichten Dichtungen ist.

13. Vorrichtung nach Anspruch 11 oder nach Anspruch 12, bei der der erste Abschnitt (81) der Transporteinheit (80) ein Deckelabschnitt ist und der zweiten Abschnitt (82) der Transporteinheit ein Körperabschnitt oder ein Basisabschnitt ist.

14. Vorrichtung nach Anspruch 13, bei der der Deckelabschnitt (81) und der Körperabschnitt oder der Basisabschnitt (82) der Transporteinheit (80) durch Druck miteinander abgedichtet werden können.

15. Vorrichtung nach einem der Ansprüche 1 bis 14, bei der die Transporteinheit (80) mit Rädern (89a, 89b) versehen ist.

16. Vorrichtung nach einem der Ansprüche 1 bis 15, bei der die Überprüfungseinheit (10) außerdem in dem ersten Abschnitt (11) integrierte Vergrößerungsmittel enthält.

17. Vorrichtung nach einem der Ansprüche 1 bis 16, bei der die Transporteinheit (80) ein inneres Polsterungs- oder Stoßdämpfungsmaterial enthält.

18. Vorrichtung nach einem der Ansprüche 1 bis 17, bei der der Verschluss der Transporteinheit (80) die Überprüfungseinheit (10) darin angeordnet festhält.

19. Vorrichtung nach einem der Ansprüche 1 bis 18, bei der die Überprüfungseinheit (10) mit einer abdichtbaren Öffnung (22) zur Aufnahme einer Sonde versehen ist.

20. Vorrichtung nach Anspruch 19, bei der die Überprüfungseinheit (10) mit einer weiteren abdichtbaren Überprüfungsöffnung (21) mit einem Durchmesser, der wesentlich größer als der der abdichtbaren Öffnung (22) ist, versehen ist.

## Revendications

1. Appareil pour l'inspection et possiblement le transport confinés d'un objet potentiellement dangereux, l'appareil comprenant :
une unité d'inspection (10), l'unité d'inspection (10) incluant au moins une première section (11) et une deuxième section (12) capables de s'ouvrir pour recevoir l'objet puis de se refermer pour fournir un environnement scellé de façon étanche à l'air pour une inspection manuelle de l'objet, la première section (11) et la deuxième section (12) étant essentiellement rigides, l'unité d'inspection (10) incluant aussi au moins un élément en forme de gant permettant à un utilisateur extérieur à l'environnement scellé de l'unité d'inspection (10) de manipuler l'objet au sein de l'unité d'inspection (10) fermée ; et
une unité de transport (80), l'unité de transport (80) incluant au moins une première section (81) et une deuxième section (82) capables de s'ouvrir pour recevoir entièrement l'unité d'inspection (10) puis de se refermer pour fournir un environnement scellé de façon étanche à l'air supplémentaire contenant l'unité d'inspection (10), la première section (81) et la deuxième section (82) de l'unité de transport (80) étant essentiellement rigides.

2. Appareil selon la revendication 1, **caractérisé en ce qu'**au moins une partie de l'unité d'inspection (10) est essentiellement transparente.

3. Appareil selon l'une quelconque des revendications 1 ou 2, **caractérisé en ce qu'**au moins une partie d'un corps de la section (12) ou d'une base de la section (12) de l'unité d'inspection (10) est opaque, de préférence d'une couleur sombre.

4. Appareil selon l'une quelconque des revendications 1 à 3, **caractérisé en ce que** l'objet est une enveloppe, un courrier, un paquet, un colis, une lettre ou similaire.

5. Appareil selon l'une quelconque des revendications 1 à 4, **caractérisé en ce que** la première section (11) et la deuxième section (12) de l'unité d'inspection (10) sont agencées pour être pincées ou verrouillées ensemble.

6. Appareil selon la revendication 5, **caractérisé en ce que** la première section (11) et la deuxième section (12) de l'unité d'inspection (10) sont articulées entre elles.

7. Appareil selon l'une quelconque des revendications 5 ou 6, **caractérisé en ce que** la première section (11) de l'unité d'inspection (10) est un couvercle et la deuxième section (12) de l'unité d'inspection (10) est un corps ou une base.

8. Appareil selon l'une quelconque des revendications 1 à 7, **caractérisé en ce que** l'unité de transport (80) peut, en général, être portée et déplacée par une personne seule.

9. Appareil selon l'une quelconque des revendications 1 à 8, **caractérisé en ce que** l'utilisateur peut inspecter visuellement l'objet dans l'unité d'inspection (10).

10. Appareil selon l'une quelconque des revendications 1 à 9, **caractérisé en ce qu'**il est prévu deux éléments en forme de gants.

11. Appareil selon l'une quelconque des revendications 1 à 10, **caractérisé en ce que** la première section (81) et la deuxième section (82) de l'unité de transport (80) sont agencées pour être pincées ensemble.

12. Appareil selon l'une quelconque des revendications 1 à 11, **caractérisé en ce que** l'unité de transport (80) présente une double paroi avec deux fermetures indépendantes scellées de façon étanche à l'air.

13. Appareil selon l'une quelconque des revendications 11 ou 12, **caractérisé en ce que** la première section (81) de l'unité de transport (80) est un couvercle et la deuxième section (82) de l'unité de transport (80) est un corps ou une base.

14. Appareil selon la revendication 13, **caractérisé en ce que** le couvercle (81) et le corps ou la base (82) de l'unité de transport (80) sont agencés pour être scellés ensemble par pression.

15. Appareil selon l'une quelconque des revendications 1 à 14, **caractérisé en ce que** l'unité de transport (80) est munie de roues (89a, 89b).

16. Appareil selon l'une quelconque des revendications 1 à 15, **caractérisé en ce que** l'unité d'inspection (10) inclut aussi des moyens de grossissement intégrés dans la première section (11).

17. Appareil selon l'une quelconque des revendications 1 à 16, **caractérisé en ce que** l'unité de transport (80) comprend un matériau intérieur de capitonnage ou d'absorption des chocs.

18. Appareil selon l'une quelconque des revendications 1 à 17, **caractérisé en ce que** la fermeture de l'unité de transport (80) maintient fermement l'unité d'inspection (10) placée à l'intérieur.

19. Appareil selon l'une quelconque des revendications 1 à 18, **caractérisé en ce que** l'unité d'inspection (10) est munie d'une ouverture scellable (22) pouvant recevoir une sonde.

20. Appareil selon la revendication 19, **caractérisé en ce que** l'unité d'inspection (10) est munie en outre d'une ouverture scellable d'inspection (21) d'un diamètre notablement plus grand que l'ouverture scellable (22).
